# EUROPÄISCHE PATENTSCHRIFT

(11) **EP 0 877 187 B1**
(45) Veröffentlichungstag und Bekanntmachung des Hinweises auf die Patenterteilung: **19.02.2003**
(21) Anmeldenummer: 98108514.5
(22) Anmeldetag: 11.05.1998
(51) Int. Cl.: F16L 5/02

(54) **Wanddurchführung für Rohre oder Kabel**
Wall transition for pipes or cables
Traversée murale pour des tuyaux ou des câbles

(30) Priorität: 10.05.1997 DE 29708413 U
(43) Veröffentlichungstag der Anmeldung: 11.11.1998
(73) Patentinhaber: Betonbau GmbH, D-68753 Waghäusel (DE)
(72) Erfinder: Primus, Illo-Frank, Dr.-Ing., 76327 Pfinztal/Berghausen (DE)
(74) Vertreter: Hiebsch, Gerhard F., Dipl.-Ing.

(56) Entgegenhaltungen:
- DE-A- 3 114 464
- US-A- 5 624 123

## Beschreibung

Die Erfindung betrifft eine Wanddurchführung für Rohre oder Kabel in einem Durchbruch einer Wand -- insbesondere eine wasser- und gasdichte Durchführung in einer Betonwand einer Transformätorenstation, Gasstation, Pumpenstation oder eines Schalthauses -- mit einem Rohrstück, von dessen Außenfläche ein Flansch als Kupplungskragen frei abragt.

Bei Wanddurchführungen dieser Art als vorgefertigtes Bauteil ist der Flansch an wenigstens eine Endkante des Rohrstückes angeformt und dient als Anschlag bei Einschub des Rohrstücks in eine Maueröffnung entsprechenden Durchmessers oder zur zeitweiligen Befestigung an einer Schalung, wenn eine Betonwand um das Rohrstück herum gegossen wird.

Nach DE-U-1 872 956 soll eine zuverlässige Abdichtung gegen unerwünschtes Eindringen von Gas durch eine Mauer sowie gleichzeitig eine elektrische Trennstelle geschaffen werden, die das Auftreten gefährlicher Spannungen verhindert. In einem Außenrohr ist an einem Endflansch ein Innenrohr fest verschweißt, das einerseits aus dem Außenrohr axial hinausragt sowie anderseits in diesem nahe eines anderen Flansches endet, der den Rohrinnenraum i.w. verschließt und lediglich einen Anschlußstutzen freiläßt. Im Innenrohr verläuft ein Rohranschlußstück mit einem am freien Ende vorgesehenen Gewinde. Dieses Rohranschlußstück ist mit den beiden Enden des Innenrohres durch elastische Balge verbunden, und es endet in einer vom Außenrohr gebildeten Kammer. Diese ist zum Durchführen von Strängen wie Rohren oder Kabeln nicht geeignet, ebenso fehlt es an einer Möglichkeit, in die Kammer hineinzugreifen. Zudem müßten an der Baustelle mindestens vier Abdichtungen hergestellt werden, nämlich zum einen am Rohrstutzen zum Flansch sowie zum anderen vom Innenrohr zum Flansch jeweils als Verschweißung und darüber hinaus die Anschlüsse vom Rohrstutzen zum Innenraum sowie vom Anschlußrohr zum ankommenden Rohr. Die aus elektrisch isolierendem Werkstoff bestehenden Balge bilden je zwei weitere Abdichtungsstellen, so daß mindestens acht Abdichtungsstellen entstehen.

Das aus dem Außenrohr ragende innere Rohrstück schließt hier einen Einbau in die Schalung vor der Herstellung der Wand aus, auch ist das am inneren Rohrstück befestigte Anschlußstück nicht über das durchzuführende Rohr legbar, sondern muß an einem weiteren Rohr befestigt werden, das zum Anschluß der Fluidleitung dient.

Die GB-A-1 314 345 zeigt eine Rohrdurchführung mit elastischem innerem Rohrstück, welches das -- nur in einem sehr engen Durchmesserbereich wählbare -- durchzuführende Rohr dicht umschließt.

Der US-A-5,624,123 ist eine Verschlusseinrichtung für einen als Abfallsammler od.dgl. dienenden Betonkasten zu entnehmen. Diese Verschlusseinrichtung umfasst ein Rohrstück mit äußerem Ankerflansch sowie eine das Rohrstück durchspannende Membrane. Jener Ankerflansch ist an seinem freien Ende mit einem wulstartigen Ergänzungsflansch als Kopfstück eines T-förmigen Querschnitts versehen, und der Membrane sind zwei Markierungslinien zugeordnet, die in Draufsicht knieförmig verlaufen sowie in Membranenmitte eine Art Zwickel mit Zugschleife bilden. Diese Verschlusseinrichtung wird zum Einbringen in den Betonkasten mit einem Spannelement verbunden und kann dann -- nach Wegnahme der Membrane -- auch von einem Rohr durchsetzt werden. In Einbaulage greift das Flanschelement in den Beton ein, der an der Außenfläche des Rohrstückes endet.

Aus der DE 31 14 464 A1 wird zur Abdichtung der Durchtrittsstelle eines Rohres, eines Kanals od.dgl. durch eine Wand aus Beton eine ringartige Dichtungsvorrichtung aus biegsamem und kompressiblem Kunststoff vorgeschlagen, von deren Außenseite ebenfalls ein stegartiger Flansch einer Höhe von mindestens 5 mm abragt.

In Kenntnis dieses Standes der Technik hat sich der Erfinder das Ziel gesetzt, eine vielseitig einsetzbare Wanddurchführung für Kabel, Rohre od.dgl. in einem Durchbruch einer Wand zu schaffen, die aus möglichst wenig Einzelteilen besteht und einfach zu handhaben ist.

Diese Aufgabe wird erfindungsgemäß durch die Lehre des unabhängigen Anspruches gelöst; die Unteransprüche geben günstige Weiterbildungen an.

Erfindungsgemäß ist der Kupplungskragen in Abstand zum Rohrstück an einem an letzteres anschließenden Abstandsbereich mit einem randwärtigen Anschlußbereich zum Einsatz in der Wand versehen; jener Abstandsbereich bestimmt die Distanz zwischen Rohrstück und Durchbruchsleibung, zudem entspricht die Länge des Rohrstücks etwa der zugeordneten Wanddicke. Der Randbereich des Kupplungskragens soll in Einbaustellung in den Beton eingreifen sowie die Abdichtung der Durchführung zum Beton hin gewährleisten. Dazu hat es sich als günstig erwiesen, daß im Rand- oder Anschlußbereich des Kupplungskragens ringartig -- in einer besonderen Ausführung auch radial -- nutartige Einformungen verlaufen.

Nach einem weiteren Merkmal der Erfindung ist der Kupplungskragen in der Querschnittsmittelachse des Rohrstückes an dieses angeformt, d.h. im Falle mehrerer benachbarter Durchführungen fluchten deren Kupplungskragen miteinander. Eine nähere Anordnung zueinander wird dann erreicht, wenn der Kupplungskragen unmittelbar neben der Querschnittsmittelachse oder in Abstand zu dieser an das Rohrstück angeformt ist; die Kupplungskragen können somit überlappend eingebaut werden.

Als günstig hat sich auch eine Ausführung erwiesen, deren Kupplungskragen für ein einseitiges Schrumpfen und größere Schrumpflängen an oder nahe einer Endkante des Rohrstückes an dieses angeformt und in einem Winkel zur Längsachse des Rohrstücks -- bevorzugt etwa 45° -- geneigt ist. Hier schützt der Kupplungskragen das Rohrstück nach außen hin in seiner gesamten Länge. In diesem Falle geht der geneigte Kupplungskragen vorteilhafterweise an oder nahe der Querschnittsmittelachse in einen zu dieser parallelen Rand- oder Endbereich über.

Bei einer besonderen Ausgestaltung sind mehrere Rohrstücke in eine Flanschplatte mehreckigen Umfangsrandes angeordnet; diese Flanschplatte ist ebenfalls mit einem korrugierten Randbereich ausgestattet.

Auch liegt es im Rahmen der Erfindung, am Rohrstück wenigstens ein Deckprofil -- vor allem einen querschnittlich winkelförmigen Ring aus begrenzt elastischem Werkstoff -- anzuordnen, dessen radiale Höhe etwa dem radialen Abstand des Rohrstückes von der diesem nächstliegenden Einformung des Kupplungskragens und dessen Querschnittsbreite etwa dem Abstand des Kupplungskragens von der Endkante des Rohrstückes entspricht.

Das Deckprofil kann aber auch ein Deckring aus elastischem Werkstoff mit sich zu einer Stirnseite hin konisch verjüngendem Umfang sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1, 7:: Vertikalschnitte durch jeweils einen Teil einer Wand mit in ihr vorgesehener Durchführung, die ein Rohrstück als Durchgang für Kabel od.dgl. Stränge aufweist;
- Fig. 2:: eine Frontansicht einer in Fig. 1 in die Wand eingesetzten Durchführung;
- Fig. 3:: den diametralen Querschnitt durch eine weitere Ausgestaltung einer Durchführung;
- Fig. 4:: einen weiteren diametralen Querschnitt-- zur Hälfte dargestellt -- durch eine andere Durchführung;
- Fig. 5:: eine Frontansicht zweier benachbarten Durchführungen nach Fig. 3, 4;
- Fig. 6:: eine Frontansicht einer Durchführung mit mehreren parallelen Rohrstücken.

In einem Durchbruch einer Mauer 10 eines nicht weiter dargestellten Bauwerks ist eine Durchführung 12 für einen Kabelstrang 14 vorgesehen.

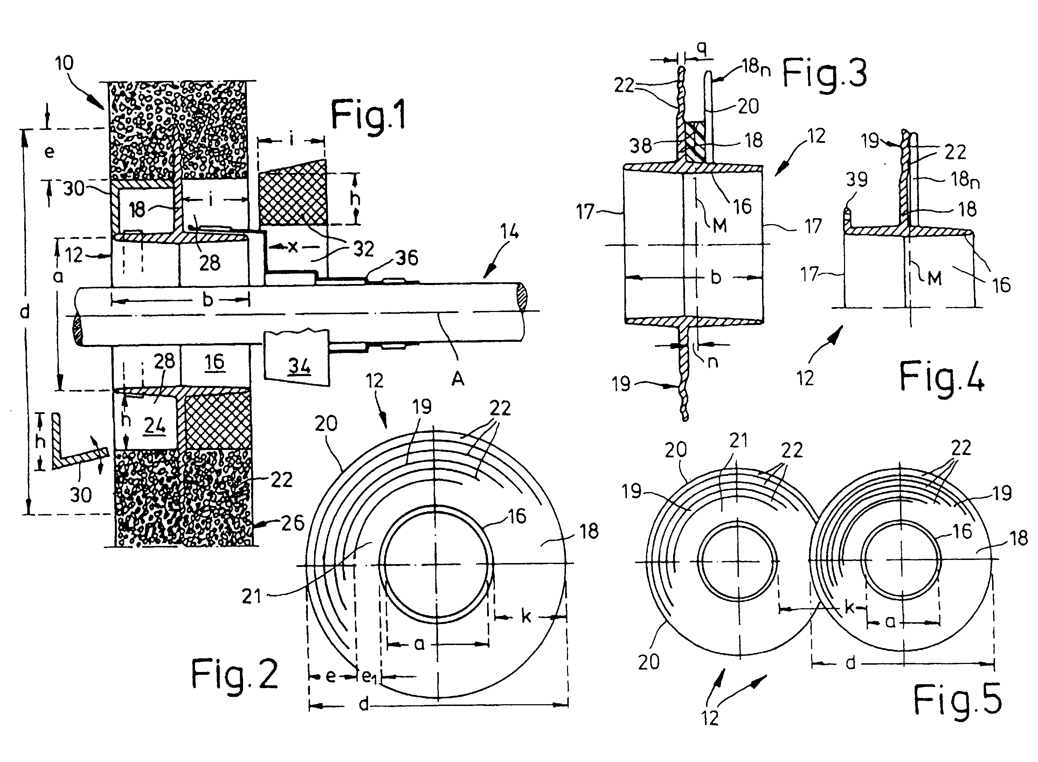

Die Durchführung 12 gemäß Fig. 1 besteht aus einem zentralen Rohrstück 16 des Innendurchmessers a, an das etwa in der Mitte seiner Querschnittslänge b radial ein scheibenartiger Außenflansch als Kupplungskragen 18 des Durchmessers d angeformt ist. Im Bereich von dessen Umfangskante 20 sind -- in Fig. 2, 5 lediglich teilweise angedeutete -- ringartige Einformungen 22 vorgesehen; der Außenflansch oder Kupplungskragen 18 ist dort also querschnittlich wellenförmig gestaltet. Der korrugierte Randbereich 19 der Breite e dient -- wie Fig. 1 erkennen läßt -- zur Festlegung in der Mauer 10. In dieser Einbaulage verbleibt zwischen der umlaufenden Leibung 24 jenes Durchbruches und dem Rohrstück 16 ein Ringbereich 21, der bevorzugt ohne Einformungen 22 bleibt, jedoch in anderer Ausführung solche enthalten kann.

Mit h ist der Einbauabstand des Rohrstückes 16 von der Leibung 24, mit i ist der parallel zur Rohr- oder Kabelachse A bestehende Abstand des Kupplungskragens 18 von der Maueroberfläche 26 kenntlich gemacht bzw. die Breite eines vom Rohrstück 16 und Leibung 24 begrenzten Spaltraumes 28.

In die Spalträume 28 können querschnittlich winkelförmige Deckringe 30 eingeschoben werden, die zu diesem Zweck -wie in Fig. 1, unten links, gezeigt -- federnd gestaltet sind. Oder es werden füllende Schaumstoffkörper 32 eingedrückt, deren Querschnitt sich in Schubrichtung x konisch verjüngt; ihre Außenfläche 34 ist zur Schubrichtung x geneigt.

Über den Kabelstrang 14 sowie den äußeren Rand 15 des Rohrstücks 16 ist in Fig. 1 ein abdichtender Schrumpfschlauch 36 gezogen.

Ist der Kupplungskragen 18 -- wie in Fig. 3 angedeutet -- um ein Maß n von etwa Kragendicke q an der Querschnittsmittelachse M verschoben, können die parallelen Rohrstücke 16 benachbarter Durchführungen 12 -- bei wechselweiser Anordnung der Kupplungskragen 18 -- bis auf ein in Fig. 5 verdeutlichtes Radialmaß k zusammengeführt werden, das dem freien Kragmaß des einen Kupplungskragens 18 samt der Breite e₁ des Ringbereiches 21 des anderen Kupplungskragens 18 entspricht. Durch jenes Abstandsmaß n entsteht zwischen solcherart angeordneten Durchführungen 12 ein Spaltabstand, in den beispielsweise eine Isoliermatte 38 der Breite e₁ eingefügt werden kann. Die außen anzubringenden Deckprofile 30, Schaumstoffkörper 32 od.dgl. Füllelemente sind in der Zeichnung vernachlässigt.

Ist der Kupplungsteller 18 entsprechend Fig. 4 unmittelbar neben der Querschnittsmittelachse M vorgesehen, liegt er dem Kupplungsteller 18ₙ des -- um 180° gedrehten -- benachbarten Rohrstücks 16 in geringem Abstand an. Im übrigen ist bei diesem Beispiel an einer Endkante 17 eine angeformte Öse 39 zu erkennen, die z.B. den zeitweiligen Anschluß an eine nicht dargestellte Schalung erleichtern hilft.

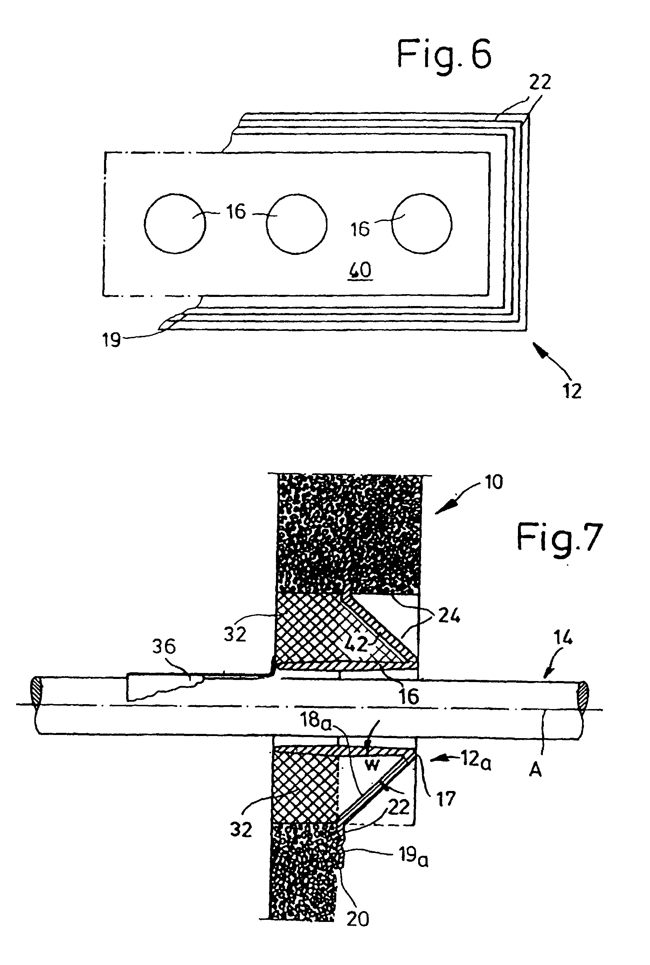

Gemäß Fig. 6 können auch mehrere -- hier drei -- Rohrstücke 16 aus einer Flanschplatte 40 herausgeformt werden, die ihrerseits mit einem korrugierten Kragenrand 19 ausgestattet ist.

Bei der Ausführung nach Fig. 7 ist der Kupplungskragen 18ₐ an einer Endkante 17 des Rohrstückes 16 angesetzt sowie mit einem Innenabschnitt 42 in einem Winkel w von etwa 45° zur Längsachse A geneigt und geht etwa in der Mitte der Querschnittslänge b oder unmittelbar neben der Querschnittsmittelachse M in einen -- ringartige Einformungen 22 enthaltenden -- korrugierten Endabschnitt 19ₐ über.

Vernachlässigt sind in Fig. 7 Teile der hier zugeordneten Schaumstoffkörper 32.

## Patentansprüche

1. Wanddurchführung für Rohre oder Kabel (14) in einem Durchbruch einer Wand (10), insbesondere Wasser- und gasdichte Durchführung in einer Betonwand einer Transformatorenstation, Gasstation, Pumpenstation oder eines Schalthauses, mit einem Rohrstück (16), von dessen Außenfläche ein Flansch als Kupplungskragen (18, 18ₐ, 40) frei abragt,
**dadurch gekennzeichnet,**
**dass** der Kupplungskragen (18, 18ₐ, 40) in Abstand zum Rohrstück (16) an einem an letzteres anschließenden Abstandsbereich (21, 42) mit einem randwärtigen Anschlußbereich (19, 19ₐ) zum Einsatz in der Wand (10) versehen ist, wobei der Abstandsbereich (21, 42) den Abstand (h) des Rohrstückes (16) von der Leibung des Durchbruches bestimmt sowie die Länge des Rohrstückes (16) etwa der Wanddicke entspricht.

2. Wanddurchführung nach Anspruch 1, **gekennzeichnet durch** einen scheibenartigen Kupplungskragen (18,18ₐ) mit kreisförmiger Umfangskante (20), in dessen Rand- oder Anschlußbereich (19, 19ₐ) ringartig nutartige Einformungen (22) verlaufen sowie einen wellenartigen Querschnitt bilden.

3. Wanddurchführung nach Anspruch 1, **gekennzeichnet durch** einen mehreckigen, insbesondere rechteckigen Kupplungskragen oder eine entsprechend geformte Flanschplatte (40).

4. Wanddurchführung nach Anspruch 3, **dadurch gekennzeichnet, dass** die Flanschplatte (40) einen Randbereich (19) mit parallelen Einformungen (22) aufweist.

5. Wanddurchführung nach einem der Ansprüche 1 bis 4, **dadurch gekennzeichnet, dass** im Rand- oder Anschlußbereich (19, 19ₐ) des Kupplungskragens (18, 18ₐ, 40) radial nutartige Einformungen (22) verlaufen.

6. Wanddurchführung nach einem der Ansprüche 1 bis 5, **dadurch gekennzeichnet, dass** der Kupplungskragen (18, 18ₐ, 40) in der Querschnittsmittelachse (M) des Rohrstückes (16) an dieses angeformt ist.

7. Wanddurchführung nach einem der Ansprüche 1 bis 5, **dadurch gekennzeichnet, dass** der Kupplungskragen (18, 18ₐ, 40) neben der Querschnittsmittelachse (M) oder in Abstand (n) zu dieser an das Rohrstück (16) angeformt ist.

8. Wanddurchführung nach einem der Ansprüche 1 bis 7, **dadurch gekennzeichnet, dass** der Kupplungskragen (18ₐ) an oder nahe einer Endkante (17) des Rohrstückes (16) an dieses angeformt und sein Abstandsbereich (42) in einem Winkel (w) zur Längsachse (A) des Rohrstücks geneigt ist.

9. Wanddurchführung nach Anspruch 8, **dadurch gekennzeichnet, dass** der geneigte Kupplungskragen (18ₐ) an oder nahe der Querschnittsmittelachse (M) in einen zu dieser parallelen Rand- oder Endbereich (19) übergeht.

10. Wanddurchführung nach Anspruch 8 oder 9, **dadurch gekennzeichnet, dass** der Neigungswinkel (w) etwa 45° beträgt.

11. Wanddurchführung nach einem der Ansprüche 1 bis 10, **dadurch gekennzeichnet, dass** am Rohrstück (16) wenigstens ein Deckprofil (30) angeordnet ist, dessen radiale Höhe (h) etwa dem radialen Abstand des Rohrstückes (16) von der diesem nächstliegenden Einformung (22) des Kupplungskragens (18, 18ₐ, 40) und dessen Querschnittsbreite (i) etwa dem Abstand des Kupplungskragens von der Endkante (17) des Rohrstückes entsprechen.

12. Wanddurchführung nach Anspruch 11, **gekennzeichnet durch** einen querschnittlich winkelförmigen Ring als Deckprofil (30) aus begrenzt elastischem Werkstoff oder **durch** einen Deckring (32) aus elastischem Werkstoff mit sich zu einer Stirnseite hin konisch verjüngendem Umfang.

## Claims

1. Wall feed-through for pipes or cabling (14) in a breakthrough in a wall (10), in particular a water-tight and gas-tight feed-through in a concrete wall in a transformer station, gas station, pumping station or a distribution hall, having a piece of pipe (16) from whose outer surface a flange projects freely as a coupling collar (18, 18a, 40), **characterised in that** the coupling collar (18, 18a, 40) is provided at a distance from the piece of pipe (16) on a spacing region (21, 42) adjoining the latter with a peripheral connecting region (19, 19a) for insertion in the wall (10), wherein the spacing region (21, 42) determines the distance (h) of the piece of pipe (16) from the soffit of the breakthrough and the length of the piece of pipe (16) approximately matches the thickness of the wall.

2. Wall feed-through according to Claim 1, **characterised by** a disk-like coupling collar (18, 18a) having a circular perimeter edge (20) in whose peripheral or connecting region (19, 19a) ring-shaped impressions (22) like grooves run and form an undulatory cross-section.

3. Wall feed-through according to Claim 1, **characterised by** a polygonal, in particular rectangular coupling collar or a correspondingly shaped flange plate (40).

4. Wall feed-through according to Claim 3, **characterised in that** the flange plate (40) has a peripheral region (19) having parallel impressions (22).

5. Wall feed-through according to one of Claims 1 to 4, **characterised in that** running in the peripheral or connecting region (19, 19a) of the coupling collar (18, 18a, 40) are radial impressions (22) like grooves.

6. Wall feed-through according to one of Claims 1 to 5, **characterised in that** the coupling collar (18, 18a, 40) is formed on the piece of pipe (16) in the cross-sectional central axis (M) of the latter.

7. Wall feed-through according to one of Claims 1 to 5, **characterised in that** the coupling collar (18, 18a, 40) is formed on the piece of pipe (16) beside the cross-sectional central axis (M) or at a distance (n) from the latter.

8. Wall feed-through according to one of Claims 1 to 7, **characterised in that** the coupling collar (18a) is formed on the piece of pipe (16) on or close to an end edge (17) of the latter and its spacing region (42) is inclined at an angle (w) to the longitudinal axis (A) of the piece of pipe.

9. Wall feed-through according to Claim 8, **characterised in that** the inclined coupling collar (18a) passes over at or close to the cross-sectional central axis (M) into a peripheral or end region (19) parallel to the latter.

10. Wall feed-through according to Claim 8 or 9, **characterised in that** the angle of inclination (w) is approximately 45°.

11. Wall feed-through according to one of Claims 1 to 10, **characterised in that** arranged on the piece of pipe (16) is at least one cover profile (30) whose radial height (h) corresponds approximately to the radial distance of the piece of pipe (16) from the impression (22) closest to the latter in the coupling collar (18, 18a, 40) and its cross-sectional width (i) corresponds approximately to the distance of the coupling collar from the end edge (17) of the piece of pipe.

12. Wall feed-through according to Claim 11, **characterised by** a cross-sectionally angular ring as cover profile (30) composed of a material of limited elasticity or by a cover ring (32) composed of an elastic material having a perimeter tapering conically towards an end face.

## Revendications

1. Traversée de parois pour des tubes ou des câbles (14) dans un passage d'une paroi (10), en particulier traversée étanche à l'eau et au gaz dans une paroi en béton d'un poste de transformateur, d'un poste de gaz, d'une station de pompage ou d'un poste de commutation, comprenant un tronçon de tube (16), dont la surface extérieure laisse libre en saillie une bride formant collerette de couplage (18, 18a, 40),
**caractérisée en ce que**, la collerette de couplage (18, 18a, 40) est munie à distance du tronçon de tube (16) dans une zone d'écartement (21, 42) se raccordant à ce tronçon d'une zone de raccordement (19, 19a) de bordure pour l'insertion dans la paroi (10), la zone d'écartement (21, 42) déterminant la distance (h) du tronçon de tube (16) par rapport à l'intrados de la traversée et la longueur du tronçon de tube (16) correspondant sensiblement à l'épaisseur de paroi.

2. Traversée de paroi selon la revendication 1, **caractérisée par** une collerette de couplage (18, 18a) en forme de disque présentant un bord périphérique circulaire (20), dans la zone (19, 19a) de bordures ou de raccordement duquel s'étendent des déformations (22) en forme de rainures annulaires et qui présentent également une section transversale ondulée.

3. Traversée de paroi selon la revendication 1, **caractérisée par** une collerette de couplage polygonale, en particulier rectangulaire ou une plaque de bride (40) de forme correspondante.

4. Traversée de paroi selon la revendication 3, **caractérisée en ce que** la plaque de bride (40) comporte une zone de bordure (19) présentant des déformations parallèles (22).

5. Traversée de paroi selon l'une des revendications 1 à 4, **caractérisée en ce que**, dans la zone de bordure ou de raccordement (19, 19a) de la collerette de couplage (18, 18a, 40) se développent des déformations radiales en forme de rainures (22).

6. Traversée de paroi selon l'une des revendications 1 à 5, **caractérisée en ce que**, la collerette de couplage (18, 18a, 40) est formée sur le tronçon de tube (16) selon l'axe transversal médian (M) de celui-ci.

7. Traversée de paroi selon l'une des revendications 1 à 5, **caractérisée en ce que**, la collerette de couplage (18, 18a, 40) est formée sur le tronçon de cube (16), à côté de l'axe transversal médian (M) ou à distance (n) de celui-ci.

8. Traversée de paroi selon l'une des revendications 1 à 7, **caractérisée en ce que**, la collerette de couplage (18a) est formée sur le tronçon de tube (16) sur un bord d'extrémité (17) de ce tronçon ou bien à proximité de ce bord, et **en ce que** sa zone à distance (42) est inclinée selon un angle (w) par rapport à l'axe longitudinal (A) du tronçon de tube.

9. Traversée de paroi selon la revendication 8, **caractérisée en ce que**, la collerette inclinée de couplage (18a) déborde sur ou à proximité de l'axe transversal médian (M) dans une zone d'extrémité ou de bordure (19) parallèle à cet axe.

10. Traversée de paroi selon la revendication 8 ou 9, **caractérisée en ce que**, l'angle d'inclinaison (w) atteint environ 45°.

11. Traversée de paroi selon la revendication 1 à 10, **caractérisée en ce qu'**est disposé sur le tronçon de tube (16) au moins un profil de pont ou de couverture (30), dont la hauteur radiale (h) correspond sensiblement à la distance du tronçon de tube (16) depuis la déformation (22) la plus proche dudit tronçon de la collerette de couplage (18, 18a, 40) et dont la largeur (i) en section transversale correspond approximativement à la distance de la collerette de couplage du bord d'extrémité (17) du tronçon de tube.

12. Traversée de tube selon la revendication 11, **caractérisée par** une bague à section transversale en forme de cornière servant de profil de pont ou de couverture (30) en matériau à élasticité limitée, ou par une bague de pont ou de couverture (32) en matériau élastique et présentant une périphérie s'effilant de façon conique à partir d'une face frontale.
